# EUROPEAN PATENT APPLICATION

(11) **EP 3 073 449 A1**
(43) Date of publication of application: **28.09.2016**
(21) Application number: 15465505.4
(22) Date of filing: 23.03.2015
(51) Int. Cl.: G07C 5/08, H04N 5/765

(54) **APPARATUS AND METHOD FOR RECORDING DATA ASSOCIATED WITH A VEHICLE**

(71) Applicant: Continental Automotive GmbH, 30165 Hannover (DE); Conti Temic Microelectronic GmbH, 90411 Nürnberg (DE)
(72) Inventor: Botusescu, Adrian, 300507 Timisoara (RO); Buerger, Carsten, 89075 Ulm (DE); Seiculescu, Ciprian, 300584 Timisoara (RO); Vladaia, Daniel, 300418 Timisoara (RO)
(74) Representative: Büchner, Jörg

(57) **Abstract**

The present invention provides to a recording apparatus and method for recording data, in particular video data associated with a vehicle. Video data are only recorded, as long as a predefined trigger event is true. Upon detecting such a trigger event, the trigger event is further analysed and the recording of the video data is immediately stopped when it is detected that the trigger event is no longer valid. In this way, the recording of the video data can be limited for reducing the amount of video data to be stored. According to further embodiments, the amount of video data to be recorded can be further minimized by adapting the video frame rate, the resolution, and compression rate or colour format of the video data.

## Description

The present invention relates to a recording apparatus and a recording method for recording data associated with a vehicle. In particular, the present invention relates to a method and an apparatus for recording video data provided by a camera in a vehicle.

### Related art

In case of an accident, visual and/or audio data recorded before such an accident could serve as objective evidence and help analysing the circumstances leading to the accident. However, currently there is no mechanism that allows a driver to record video or audio data of an accident in progress. Even though many personal devices, such as mobile phone, are equipped with digital cameras, such devices are of no assistance during the most crucial period, namely when an accident is happening. A user may use his camera device to take photographs or videos of the damage to his vehicle, but he will not be in the position to record what has happened during the accident. Using a camera while an accident is occurring will be not possible. The operation of a camera device in a dangerous situation leading to an accident might turn the driver's attention from operating his vehicle towards trying to prevent an accident. In such a situation, a driver will not be in the position to operate the camera while controlling his vehicle in order to avoid an accident.

On the other hand, if a camera system is recording continuously video data, this would lead to a large amount of video data to be recorded. Since the storage capacity of a video recording system is limited, it will be not possible to perform such an unlimited recording of video data during operation of a vehicle.

Hence, there is a need for a recording method and apparatus for recording data associated with a vehicle during an event of interest. In particular, there is a need for an efficient, reliable and memory saving recording of video data associated with a vehicle.

### Summary of the invention

According to a first aspect, the present invention provides a recording apparatus for recording data associated with a vehicle. The recording apparatus comprises a camera for providing video data. Further, the recording apparatus comprises a trigger detector for detecting a predefined trigger event and a data recorder adapted to start recording video data provided by the camera upon detecting the predefined trigger event by said trigger detector. The trigger detector verifies the detected trigger event while recording video data by said data recorder and terminates recording video data if the detected trigger event becomes invalid.

According to a further aspect, the present invention provides a recording method for recording data associated with a vehicle. The recording method comprises the steps of receiving video data from a camera; detecting a predefined trigger event; recording the received video data upon detecting the predefined trigger event; verifying the trigger event while recording the video data; and terminating the recording of video data if the detected trigger event becomes invalid.

One idea underlying the present invention is to perform recording of data associated with a vehicle, in particular video data provided by a video camera of a vehicle, only if a predetermined trigger event occurs. For this purpose, a trigger detector analysis predetermined parameters and determines a point in time, when a predefined trigger event becomes true. When such a predefined trigger event becomes true, the recording of video data is started. Subsequently, while the recording of the video data is performed, the parameters for determining the trigger event are verified. If it is determined that the conditions for the trigger event are no longer true, and consequently the trigger event becomes invalid, the recording of the data is terminated. In particular, the recording of the data can be terminated immediately after it is detected that the trigger event becomes invalid. In this way, the recording of the video data can be limited to such a period in time when the predefined trigger event is valid. Hence, the required storage capacity of the data recorder can be minimized.

By limiting the recording of data, in particular the recording of video data provided by a camera of a vehicle, based on continuously monitoring of a predefined trigger event, relevant video data can be recorded, while the required storage capacity of the data recorder can be minimized.

Hence, critical situations specified by the predefined trigger event can be analysed at a later time without going through a large amount of irrelevant data. In this way, a subsequent analysis of particular events, in particular of situations leading to an accident, can be simplified.

According to a particular implementation, the data recorder of the recording apparatus is recording video data for a predetermined time period or the data recorder is recording a predetermined number of frames after a trigger event is detected by the trigger detector. In this way, the amount of data to be recorded by the data recorder can be further limited. Hence, the recording of data can be stopped even though a detected trigger event is true for a long time.

According to another implementation, the data recorder is adapted to record further data in association with the video data. In this way, additional information which may be relevant in connection with the recorded video data can be memorized and analysed at a later time.

According to a particular implementation, the further data can be date related to the detected trigger event. In this way, it can be analysed at a later time which conditions may have caused the start of the recording of the video data.

According to a further implementation, the recording apparatus comprises a cyclic memory for continuously storing video data provided by the camera. The data recorder may be adapted to record data stored in the cyclic memory upon detecting a trigger event by the trigger detector. In this way, it is possible to record additional data, in particular video data, of a predetermined time before the detection of the trigger event. Hence, additional information may be available which may help understanding a particular situation leading to the trigger event and the associated conditions.

According to a further implementation, the trigger detector is adapted to detect a trigger event based on the video data provided by the camera. For instance, object detection may be performed based on the video data provided by the camera. However, other operations for analysing the video data and detecting a predefined trigger event are possible, too.

According to a further implementation, the trigger detector is adapted to detect a trigger event based on acceleration (positive or negative acceleration), distance to an object, speed and/or driving style and/or the trigger event is validated by a country code. For instance, the acceleration may be a negative acceleration (braking) of a vehicle. Further, a distance to an object may be detected either based on the video data provided by the camera or a further sensor, such as an ultrasonic sensor or a radar sensor. Other sensors for detecting a distance to an object are possible, too. Further, the trigger detector may also detect a trigger event based on a speed, for instance the speed of a vehicle, or a speed of another object/vehicle in the environment.

Additionally, or alternatively, it may be also possible to analyse a driving style of the vehicle. For example, breaking, strong acceleration, lane change, steering, slipping, etc. may be detected. Further, it may be also possible to analyse a country code or a regional code specifying a location of the vehicle. In this way, the recording of video data may be limited only to a particular region.

According to a further implementation, the data recorder is adapted to encrypt the data to be recorded and record the encrypted data. In this way, the security of the recorded data can be enhanced.

According to a further implementation, the recording apparatus comprises a video data converter adapted to convert the video data provided by the camera in a first format to video data of a second format. The data recorder of the recording apparatus may record the video data in the converted second format. In this way, the video data provided by the camera can be adapted before recording the video data.

According to a further implementation, the video data converter is adapted to convert a frame rate, a resolution, a compression and/or a colour-format of the video data. In this way, it is possible to adapt the amount of data of the video data to be recorded. Hence, the required storage capacity of the data recorder can be reduced.

According to a particular implementation, the video data converter is adapted to convert the video data depending on the available storage capacity of the data recorder. In this way, video data can be recorded in a high quality when a large amount of storage capacity is available in the data recorder. If the available storage capacity of the data recorder becomes smaller, the data conversion can be adapted accordingly in order to record the video data in the format requiring a smaller amount of storage capacity.

According to a further implementation, the video data converter is adapted to convert the video data based on a speed. In particular, the video data converter may be adapted to adapt the format of the video data to be recorded depending on the speed of a vehicle in which the recording apparatus is employed. Alternatively, it may be also possible to analyse a speed of an object in the environment and to adapt the format of the video data to be converted depending on such a speed of an external object. For instance, video data may be converted to video data having a high frame rate for recording situations of objects moving with a high speed, while a low frame rate is employed when video data of slow moving objects is to be recorded.

According to a further implementation of the image recording method, the image recording method comprises a step of converting the received video data from a first format to a second format, wherein the recording step records the converted video data.

According to a further aspect, the present invention provides a vehicle comprising a recording apparatus according to the present invention.

Further advantages and implementations of the present invention will become apparent from the following description in connection with the accompanying figures, wherein:
Figure 1: shows a schematically illustration of a vehicle comprising a recording apparatus according to an embodiment of the present invention; and
Figure 2: shows a flowchart of a recording method according to a further embodiment.

### Description of embodiments

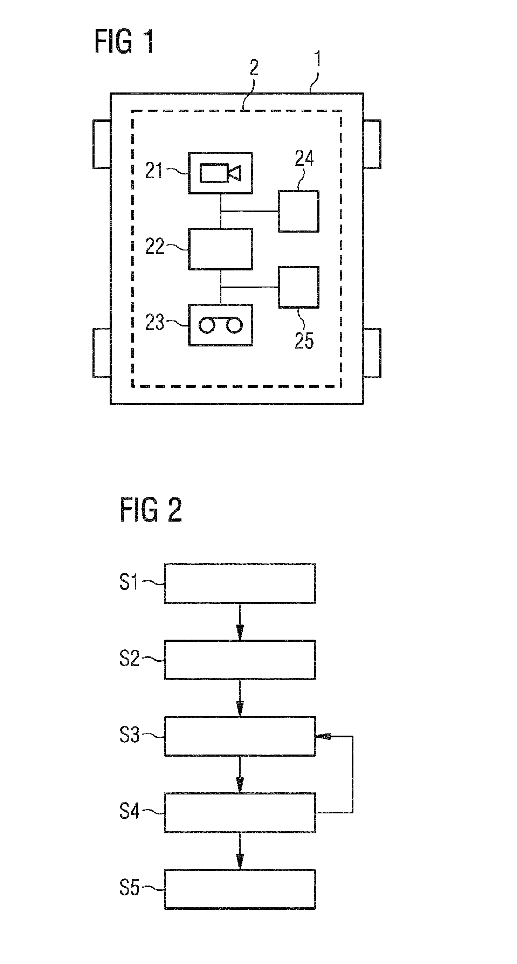

Figure 1 shows a schematically illustration of a vehicle 1 comprising a recording apparatus 2 according to an embodiment of the present invention. The recording apparatus 2 comprises a camera 21, a trigger detector 22 and a data recorder 23. Further, the recording apparatus 2 may comprise a cyclic memory 24 and/or a video data converter 25. The camera 21 may be a camera of an advanced driver assistance system (ADAS) of vehicle 1. In particular, camera 21 may be a front camera of vehicle 1. Camera 21 may be a camera providing colour or grey-scale image data. However, camera 21 may also capture image data of infrared light.

Preferably, camera 21 provides an image data sequence with a first, predetermined frame rate. Alternatively, it is also possible that camera 21 may provide an image data sequence having a variable frame rate. In this case, the frame rate of the video camera 21 may be adapted, for instance, based on a particular parameter provided by a device of vehicle 1. The image data provided by camera 21 usually may have a particular, predetermined resolution. In this case, the image data provided by camera 21 may have a particular number of pixels in horizontal and vertical dimension. Alternatively, it may also be possible that the resolution (the number of pixels in horizontal and vertical dimension) may be variable and the resolution is set based on a particular parameter.

Trigger detector 22 may analyse one or a plurality of parameters in order to identify a predefined trigger event. For instance, a trigger detector 22 may analyse the video data provided by camera 21 in order to detect a predefined trigger event. Additionally or alternatively, trigger detector 22 may be coupled to one or a plurality of additional sensors (not shown), and trigger detector 22 may analyse the data provided from these sensors in order to identify a predefined trigger event.

If trigger detector 22 analyses the video data provided from camera 21, trigger detector 22 may perform feature detection in order to identify a particular feature in the video data provided by camera 21. For instance, object detection may be performed in order to identify an external object in the environment of vehicle 1. If such an object in the environment of vehicle 1 has been identified, trigger detector 22 may perform an analysis in order to determine a distance between the identified object and the vehicle itself. If the distance between the vehicle 1 and the identified object is less than a predetermined threshold, trigger detector 22 may determine that the predefined trigger event is true. In this case, vehicle 1 may drive towards this object. If the trigger detector 22 recognizes, that the distance between the vehicle and the object is less than a predetermined threshold value, this condition may cause a trigger event. In an alternative situation, an external object, for instance another vehicle may drive towards vehicle 1. If the distance between vehicle 1 and the other vehicle becomes less than the predetermined threshold value, this may also cause a trigger event. In a special embodiment, the threshold value for the distance between vehicle 1 and the identified object may be variable. For instance, this threshold value for the distance may depend on the speed of vehicle 1 and/or the speed of the identified external object.

According to a further embodiment, trigger detector 22 may analyse the video data of camera 21 in order to identify traffic signs. For instance, such a traffic sign may specify a particular speed limit. Trigger detector 22 may identify such a traffic sign and compare the speed limit of the traffic sign with the current speed of vehicle 1. A trigger event may become true, if the speed of vehicle 1 is larger than the speed limit of the traffic sign. Alternatively, the trigger event may become true, if the speed of the vehicle 1 exceeds the speed limit of the traffic sign by a predetermined threshold value. Additionally or alternatively, trigger detector 22 may also analyse other traffic signs, for instance a ban of passing or other prohibition signs. Trigger detector 22 may compare such recognize traffic sign with the current driving situation. In case vehicle 1 performs an unauthorised driving operation, trigger detector 22 may determine that the trigger event is true, and recording of video data is started.

Alternatively or additionally, trigger detector 22 may also receive information from further devices of vehicle 1. For instance, trigger detector 22 may receive data from additional sensors, for instance a speed sensor, an acceleration sensor, a temperature sensor or any other sensor. Further, it may also possible that trigger detector 22 may receive additional information available in the vehicle 1. For instance, a hard break of vehicle 1 may be detected. Additionally, trigger detector 22 may be coupled to an advanced driver assistance system (ADAS) in order to receive further driving information of this ADAS. For instance, trigger detector 22 may receive additional information about the driving style of a vehicle 1. In case, trigger detector 22 may recognize a particular driving style, such a recognized driving style may also issue a particular trigger event. For instance, trigger detector 22 may recognize excessive or sudden steering or a slipping of vehicle 1. Further, it may also possible to identify a lane change or any other predetermined driving operation for identifying a predefined trigger event. Any other analysis for identifying a particular trigger event is possible, too.

Upon detecting a predefined trigger event by trigger detector 22, data recorder 23 starts recording video data provided by camera 21. For this purpose, the video data provided by a camera 21 may be stored in a non-volatile memory of the data recorder 23. For instance, the data may be recorded on a hard disc drive, a solid state disc drive, or any other fixed or removable memory device employed in data recorder 23. In order to enhance the security of the data stored by data recorder 23, data recorder 23 may encrypt the data before storing. For this purpose, a predefined encryption key may be applied. This encryption key may be an individual encryption key of data recorder 23, or a common encryption key may be used for a plurality of data recorders 23.

In a particular embodiment, data recorder 23 may perform a data recording of video data provided by camera 21 for a predetermined period of time. For instance, the data may be recorded for 10 seconds, 30 seconds, 1 minute or 5 minutes. However, any other period of time for recording video data upon detecting a predefined trigger event is possible, too. Alternatively, it is also possible to perform a data recording of the video data for a predefined number of frames. If the predetermined period of time has been elapsed or the predefined number of frames has been recorded, the data recorder 23 stops recording video data.

During the data recording by data recorder 23, trigger detector 22 continuous analysing the situation and verifying the detected trigger event. If trigger detector 22 recognizes that the conditions of the detected trigger event are no longer valid, trigger detector 22 indicates to data recorder 23 that the trigger event is invalid. In this case, trigger detector 23 may immediately terminate the recording of the video data provided by camera 21. According to a particular embodiment, data recorder 23 may delete the recorded video data, if trigger detector 22 indicates that the trigger event has become invalid. In this case, the storage capacity for further data recording can be increased.

After a first trigger event has been detected by trigger detector 22 and data recording has been started, trigger detector 22 may further on monitor the corresponding trigger sources for additional trigger events. In case trigger detector 22 detects an additional trigger event while recording data due to a previous trigger event, the detected trigger events may be combined. Thus, all detected trigger events may be considered as a common single trigger event, and data recording is continued until all detected trigger events become invalid. Alternatively, data recording may be stopped after a predetermined time period or a predefined number of frames have been recorded. For this purpose, the time period or the number of frames may be determined based on each determined trigger event. In particular, time period or the number of frames may be counted with respect to the first trigger event or the last trigger event.

Data recorder 23 may also add further additional information to the video data provided by camera 21 and record the video data of camera 21 together with this additional information. For instance, this additional information may be the reason, why the trigger event has been detected. Additionally or alternatively, it is also possible to record additional information of vehicle 21. For instance, this additional information may indicate the current speed of vehicle 21, information about a traffic sign recognized in the environment of the vehicle 1, general information about the environment of vehicle 1, for instance temperature, a rain rate, information about further objects in the environment of vehicle 1, information about driving style, for instance a lane change, information about driving operations, for instance a positive or negative acceleration of vehicle 1, or any other information. By recording such additional information together with the video data of camera 21, a subsequent analysis in case of an accident may be enhanced.

According to a further embodiment, video data provided by camera 21 may be temporarily stored in a cyclic memory 24. In such a cyclic memory 24, each video image provided by camera 21 may be temporarily stored. If the storage capacity of cyclic memory 24 has been reached, the oldest video image may be deleted and replaced by a new video image provided by camera 21. In such a manner, a predetermined number of video images can be stored. Upon trigger detector 22 detects a predefined trigger event, the content of cyclic memory 24 may be copied to data recorder 23 and data recorder 23 may immediately store all data previously stored in cyclic memory 24. In this way, it is possible to record a video data of a situation before detecting the predefined trigger event by trigger detector 22.

According to a further embodiment, the format of the video data recorded by data recorder 23 may be adapted. For instance, video data may be recorded with a high frame rate, if vehicle 1 is moving with a high speed. It may also possible to record the video data with a high frame rate if an object in the environment of a vehicle 1 is moving with a high speed. In this case it may be interesting to identify many details in the video sequence based on such a high frame rate. However, such a high frame rate will cause a large amount of data to be recorded by data recorder 23. Thus, the storage capacity of data recorder 23 will be exceeded in s short period. In order to enlarge the storage capacity of data recorder 23, the resolution of the video data to be recorded may be reduced, the compression of the video data to be recorded may be enhanced, or grey-scale/black and white video data may be recorded instead of colour video data.

Alternatively, if vehicle 1 is only moving very slow or is still standing and/or the external objects in the environment of vehicle 1 are also moving with low speed or the objects do not move, data recorder 23 may record video data with a low frame rate. In this case, video data may be recorded with a higher resolution, lower compression rate and/or coloured image data are recorded instead of grey-scale or black and white image data.

In order to adapt the video parameter, e.g. frame rate, resolution, compression mode or colour mode, data recorder 23 may sent a command to camera 21 to adapt the setting of camera 21 accordingly.

In an alternative embodiment, recording apparatus 2 may further comprise a video data converter 25 for adapting the video data of camera 21 accordingly. Video data converter 25 may receive video data provided by camera 21 in a first format and convert the video data to a second format. For instance, video data converter 25 may convert the frame rate of the video data, the resolution of the video data and/or may compress the received video data. It may also possible that video data 25 may convert colour video images to grey-scale or black and white video images.

According to a further embodiment, the video format of the video data to be recorded by data recorder 23 may be also adapted based on the available further storage capacity of data recorder 23. For instance, video data may be recorded in a high video frame rate, a high resolution, and/or a low compression rate if a huge amount of storage capacity is available. If it is detected that the storage capacity of data recorder 23 becomes lower (e.g. the available storage capacity is less than a predetermined threshold value), the frame rate may be reduced, the resolution may be reduced or the compression may be enhanced. Further, it may also possible to record greyscaled or black and white video images instead of colour video data if the available storage capacity of data recorder 23 is lower than a predetermined threshold. According to a still a further embodiment, a priority may be assigned to each detected trigger event. For example, a predetermined priority may be assigned to each source causing a trigger event, and the corresponding priority may be assigned to a detected trigger event in accordance with the priority assigned to the respective trigger source. For example, a speed higher than a predetermined threshold value may have a low priority, excessive or sudden steering or a slipping of vehicle 1 may have a medium priority, and a high negative acceleration may have a high priority. However, it may also possible to adapt the priority depending on the value of a trigger source. For example, if a speed of vehicle 1 exceeds a first threshold value but is lower than a second threshold value, a first priority is determined. If the speed is higher than the second speed, a second priority is determined.

If a priority is assigned to a detected trigger event, the data recording can be adapted accordingly. For example, the time period or the maximum number of frames can be set up accordingly. Thus, the data recording may be carried out for a short time period, if a trigger event having a low priority is detected, and the data recording may be carried out for a longer time period, if a trigger event having a higher priority is detected.

It may also possible to combine priority of a detected trigger event and available capacity of a recording medium in order to determine whether or not data recording is performed. For example, if the available storage capacity is higher than a first threshold value, data recording is performed only if a trigger event having a high priority is detected. If the available storage capacity is higher than the first threshold value, data recording is performed irrespective of the assigned priority.

Figure 2 illustrates a flowchart of a recording method according to a further embodiment. In a first step S1, video data is received from a camera 21. Subsequently, a predefined trigger event is detected in step S2. Upon detecting the predefined trigger event, this received video data are recorded in step S3 and in step S4 the trigger event is verified while recording the video data. If the verification of the trigger event determines that the trigger event becomes invalid, the recording of video data is terminated in step S5.

In a particular embodiment, the method may further comprise an additional step for converting the received video data from a first format to a second format, and the recording step S3 records the converted video data.

Summarizing, the present invention relates to a recording apparatus and method for recording data, in particular video data associated with a vehicle. Video data are only recorded, as long as a predefined trigger event is true. Upon detecting such a trigger event, the trigger event is further analysed and the recording of the video data is immediately stopped when it is detected that the trigger event is no longer valid. In this way, the recording of the video data can be limited for reducing the amount of video data to be stored. According to further embodiments, the amount of video data to be recorded can be further minimized by adapting the video frame rate, the resolution, and compression rate or colour format of the video data.

## Claims

1. A recording apparatus (2) for recording data associated with a vehicle (1), comprising:
a camera (21) for providing video data;
a trigger detector (22) for detecting a predefined trigger event; and
a data recorder (23) adapted to start recording video data provided by said camera (21) upon detecting the predefined trigger event by said trigger detector (22),
wherein said trigger detector (22) verifies the detected trigger event while recording video data by said data recorder (23) and said data recorder (23) stops recording video data if the detected trigger event becomes invalid.

2. The recording apparatus (2) according to claim 1, wherein said data recorder (23) is recording video data for a predetermined time period or said data recorder (23) is recording a predetermined number of frames when a trigger event is detected by said trigger detector (22).

3. The recording apparatus (2) according to claim 1 or 2, wherein said data recorder (23) is adapted to record further data in association with said recorded video data.

4. The recording apparatus (2) according to claim 3, wherein said further data being data related to said detected trigger event.

5. The recording apparatus (2) according to any of claims 1 to 4, further comprising a cyclic memory (24) for continuously storing video data provided by said camera (21);
wherein said data recorder (23) being adapted to record data stored in said cyclic memory (55) upon detecting the predefined trigger event by said trigger detector (22).

6. The recording apparatus (2) according to any of claims 1 to 5, wherein said trigger detector (22) being adapted to detect the predefined trigger event based on the video data provided by said camera (21).

7. The recording apparatus (2) according to any of claims 1 to 6 wherein said trigger detector (22) being adapted to detect a trigger event based on an acceleration, a distance to an object, a speed and/or a driving style and/or the trigger event is validated by a country code.

8. The recording apparatus (2) according to any of claims 1 to 7, wherein said data recorder (23) being adapted to encrypt the data to be recorded and recording the encrypted data.

9. The recording apparatus (2) according to any of claims 1 to 8, further comprising a video data converter (25), adapted to convert the video data provided by said camera (21) from a first format to a second format, wherein said data recorder (23) recording the video data in the second format.

10. The recording apparatus (2) according to claim 9, wherein said video data converter (55) being adapted to convert a frame rate, resolution, compression and/or colour-format of the video data.

11. The recording apparatus (2) according to claim 9 or 10, wherein the video data converter (25) being adapted to convert the video data depending on an available storage capacity of the data recorder (23).

12. The recording apparatus (2) according to any of claims 9 to 11, wherein the video data converter (25) being adapted to convert the video data based on a speed.

13. A vehicle (1) comprising a recoding apparatus (2) according to any of claims 1 to 12.

14. A recording method for recording data associated with a vehicle, comprising the steps of:
receiving (Sl) video data from a camera (21);
detecting (S2) a predefined trigger event;
recording (S3) the received video data upon detecting the predefined trigger event;
verifying (S4) the trigger event while recording the video data
terminating (S5) the recording of video data if the detected trigger event becomes invalid.

15. The recording method according to claim 14, further comprising a step of converting the received video data from a first format to a second format, wherein the recoding step (S3) records the converted video data.
